# EUROPEAN PATENT APPLICATION

(11) **EP 1 089 521 A2**
(43) Date of publication of application: **04.04.2001**
(21) Application number: 00308396.1
(22) Date of filing: 25.09.2000
(51) Int. Cl.: H04L 29/06

(54) **Methods and apparatus for controlling communications networks**

(30) Priority: 27.09.1999 CA 2283607
(71) Applicant: Nortel Networks Limited, Montreal, Quebec H2Y 3Y4 (CA)
(72) Inventor: Hobbs, Christopher W. L., Ottawa, Ontario K1N 5C4 (CA); Young, George R., Ottawa, Ontario K2C 0W8 (CA)
(74) Representative: Dearling, Bruce Clive

(57) **Abstract**

In methods and apparatus (100) for controlling a communications network supporting a Layer 3 service, data characterizing activity of the network both in Layer 3 and in at least one Layer below Layer 3 is collected. The collected data are processed to determine that a reconfiguration of the at least one Layer below Layer 3 is favourable, and to determine a favoured reconfiguration of the at least one Layer below Layer 3. Implementation of the favoured reconfiguration is initiated. The Layer 3 service may be a packet data service, such as Internet Protocol service, and the layers below Layer 3 may include an optical transport layer which is reconfigured based on processing of data collected from both the optical transport layer and the packet data layer. Rapid reconfiguration of the optical transport layer according to data collected from both the packet data layer and the optical transport layer reduces over-provisioning of the network needed to meet difficult-to-predict traffic patterns and loss of revenue due to inability to serve traffic with the current network configuration. A Fuzzy Logic control algorithm is described.

## Description

This invention relates generally to methods and apparatus for controlling communications networks, and more particularly to methods and apparatus for controlling communications networks supporting Layer 3 services.

References to "Layers" in this specification refer to Layers as defined in the OSI model of communications network services. In particular, Layer 1 of the OSI model is the Physical Layer, Layer 2 is the Data Link Layer and Layer 3 is the Network Layer.

Providers of Layer 3 network services, for example Internet Protocol (IP) Service Providers, manually reconfigure Layer 1 and Layer 2 supporting their Layer 3 services from time to time in order to improve the Layer 3 performance of their networks. Such manual reconfiguration may be performed daily by some Internet Service Providers (ISPs).

Each manual reconfiguration requires the time and considerable skill of one or more network operators who have a good intuitive understanding of the network and its operation. The growing size and complexity of networks providing Layer 3 services, and the growing quantity and unpredictability of the traffic they carry, tax the network operators' skills, their understanding of the network and its operation, and their ability to keep pace with the need for required reconfigurations. Moreover, the results of the manual reconfigurations vary considerably from network operator to network operator, and are generally suboptimal. Furthermore, the demand for skilled network operators outstrips their availability in the marketplace.

This invention seeks to reduce or eliminate the problems of manual reconfiguration of Layer 3 networks as outlined above.

One aspect of the invention provides a controller for controlling a communications network supporting a Layer 3 service. The communications network has at least one Layer below Layer 3 supporting the Layer 3 service. The controller comprises a data collector operable to collect data characterizing activity of the network at both Layer 3 and at the at least one Layer below Layer 3. The controller further comprises a data processor operable to process the collected data to determine that a reconfiguration of the at least one Layer below Layer 3 is favourable, and to determine a favoured reconfiguration of the at least one Layer below Layer 3. The controller further comprises a reconfiguration initiator operable to initiate implementation of the favoured reconfiguration.

Rapid reconfiguration of the layer beneath Layer 3 according to data collected from both Layer 3 and the layer beneath Layer 3 reduces over-provisioning of the network needed to meet difficult-to-predict traffic patterns and loss of revenue due to inability to serve traffic with the current network configuration.

In Layer 3 services, such as Internet Protocol (IP) services, revenue increases approximately linearly with the number of subscribers served whereas network costs increase approximately as the square of the number of subscribers served. This pattern is unlike the corresponding pattern for voice services in which traffic patterns are predictable enough to permit a network hierarchy that enables network costs to grow sublinearly as the number of subscribers grows. IP networks are made "flat" (i.e. without hierarchy) because the traffic patterns are not so readily predicted or as geographically focussed as voice traffic, so costs will go up as the square of the number of subscribers served unless the network is reconfigured in response to observed traffic. The faster and more accurately this reconfiguration can be tailored to traffic patterns, the less overprovisioning is needed to avoid losing revenue due to lost traffic, or the more traffic can be served at a given level of overprovisioning for more revenue. Collection of data from both Layer 3 and the layers below Layer 3, and processing it together permits more accurate tailoring of the reconfiguration to the traffic patterns.

The data processor may be operable to process collected data as Fuzzy Logic variables according to Fuzzy Logic rules to determine that a reconfiguration of the at least one Layer below Layer 3 is favourable.

The data processor may also be operable to process collected data as Fuzzy Logic variables according to Fuzzy Logic rules to determine a favoured reconfiguration of the at least one Layer below Layer 3.

In particular, the data collector may be operable to collect data characterizing Layer 3 traffic, and data characterizing configurations of the at least one Layer below Layer 3, and the data processor may be operable to process the collected traffic data as Fuzzy Logic variables, and may be operable to process the configuration data to define Fuzzy Logic rules.

Fuzzy Logic techniques offer the potential of stable control for non-stationary systems that are not well-defined. Moreover, unlike some alternative techniques, for example Neural Network techniques, Fuzzy Logic techniques enable network operators to derive some understanding of why the network behaves as it does from the successful Fuzzy Logic control strategies that can be developed over time with sufficient network traffic data.

In particular, the Fuzzy Logic variables may comprise variables selected from the group consisting of
accepted traffic discarded in network; traffic refused at ingress; use of high cost links; broken Service Level Agreements (SLAs); traffic delivered beyond requirements of SLAs; and cost or revenue loss attributable to any of: accepted traffic discarded in network; traffic refused at ingress; use of high cost links; broken Service Level Agreements; and traffic delivered beyond requirements of SLAs.

At least some of the Fuzzy Logic variables may characterize Layer 3 traffic as applied to transmission links in the at least one Layer below Layer 3, and at least some of the Fuzzy Logic rules may be based on configurations of the transmission links.

Alternatively or in addition, at least some of the Fuzzy Logic variables may characterize revenue dependent on specific transmission link configurations, and at least some of the Fuzzy Logic rules may be based on configurations of the transmission links.

Using Fuzzy Logic variables that relate directly to revenues offers network providers the potential of controlling their networks in a manner which is tailored to revenue generation.

The data processor may be operable to process collected data according to Data Mining techniques to improve definitions of Fuzzy Logic variables.

The reconfiguration initiator may be operable to initiate reconfiguration of links below Layer 3 selected from the group consisting of: physical links of the network below Layer 3; SONET/SDH paths below Layer 3; virtual paths of network below Layer 3; virtual channels of network below Layer 3; and label switched paths of network below Layer 3.

(In this specification the term "label switching" refers to switching techniques in which a label is applied to data, the data is switched through a network using the label, and the label is removed from the data. One important example of a label switching technique is MPLS.)

In one important embodiment of the invention, the Layer 3 service is a packet data service, for example an Internet Protocol (IP) service, and the Layer 1 and Layer 2 of the network supporting the IP service include an optical transport layer including rapidly reconfigurable optical cross-connects. In this embodiment, one aspect of the invention provides a controller for controlling a communications network supporting a packet data service. The communications network has an optical transport layer below a packet data layer. The method comprises collecting data characterizing activity of the network at both the packet data layer and the optical transport layer. The method further comprises processing the collected data to determine that a reconfiguration of the optical transport layer is favourable, and to determine a favoured reconfiguration of the optical transport layer. The method further comprises initiating implementation of the favoured reconfiguration.

Rapid reconfiguration of the optical transport layer according to data collected from both the packet data layer and the optical transport layer reduces over-provisioning of the network needed to meet difficult-to-predict traffic patterns and loss of revenue due to inability to serve traffic with the current network configuration.

Another aspect of the invention provides a node for a communications network. The node comprises a router for routing data packets, an cross-connect switch connected to the router for configuring transmission links connected to other nodes, and a configuration controller connected to the router and to the cross-connect switch for controlling configuration of the transmission links. The configuration controller is operable to collect data characterizing activity of the network at both the router and the cross-connect switch, to process the collected data to determine that a reconfiguration of the transmission links is favourable, to determine a favoured reconfiguration of the transmission links, and to initiate implementation of the favoured reconfiguration.

The configuration controller may comprise functionality which is integrated with the router, functionality which is integrated with the cross-connect switch, functionality which is separate from the router and the cross-connect switch or any combination of the above.

Another aspect of the invention provides a communications network for supporting a Layer 3 service. The network comprises a plurality of interconnected network nodes. Each node comprises a router for routing data packets, a cross-connect switch connected to the router for configuring transmission links connected to other nodes, and a configuration controller connected to the router and to the cross-connect switch for controlling configuration of the transmission links. The configuration controller is operable to collect data characterizing activity of the network at both the router and the cross-connect switch, to process the collected data to determine that a reconfiguration of the transmission links is favourable, to determine a favoured reconfiguration of the transmission links, and to initiate implementation of the favoured reconfiguration.

The configuration controller may comprise centralized functionality which is connected to multiple nodes of the network, or may comprise functionality which is distributed among at least some of the nodes, or may comprise a combination of centralized and distributed functionality.

A further aspect of the invention provides a method for controlling a communications network supporting a Layer 3 service, the communications network having at least one Layer below Layer 3 supporting the Layer 3 service. The method comprises collecting data characterizing activity of the network at both Layer 3 and at the at least one Layer below Layer 3. The method further comprises processing the collected data to determine that a reconfiguration of the at least one Layer below Layer 3 is favourable, and to determine a favoured reconfiguration of the at least one Layer below Layer 3. The method further comprises initiating implementation of the favoured reconfiguration.

The step of collecting data may comprise collecting data characterizing activity of a local subnetwork at both Layer 3 and at the at least one Layer below Layer 3. The step of processing the collected data may comprise processing the collected data to determine that a reconfiguration of the local subnetwork at the at least one Layer below Layer 3 is favourable, and to determine a favoured reconfiguration of local subnetwork at the at least one Layer below Layer 3. The step of initiating implementation of the favoured reconfiguration may comprise initiating reconfiguration of the local subnetwork.

The method may further comprise collecting data characterizing activity of a larger network containing the local subnetwork at both Layer 3 and at the at least one Layer below Layer 3, processing the collected data to determine that a reconfiguration of the larger network at the at least one Layer below Layer 3 is favourable, and to determine a favoured reconfiguration of larger network at the at least one Layer below Layer 3, and initiating reconfiguration of the larger network.

The local subnetwork reconfigurations can be achieved relatively quickly to respond to rapid local fluctuations in traffic patterns. The slower reconfigurations of the larger networks may lead to more optimum results over the long term.

Yet another aspect of the invention provides a method for controlling a communications network supporting a packet data service. The communications network has an optical transport layer below a packet data layer. The method comprises collecting data characterizing activity of the network at both the packet data layer and the optical transport layer. The method further comprises processing the collected data to determine that a reconfiguration of the optical transport layer is favourable, and to determine a favoured reconfiguration of the optical transport layer. The method further comprises initiating implementation of the favoured reconfiguration.

Exemplary embodiments of the invention are described below with reference to the accompanying drawings, in which:
FIG.1 is a block schematic diagram of a communications network according to an embodiment of the invention; and
FIG.2 is a flow chart illustrating operation of a Configuration Manager (CM) of the network of FIG.1 according to an embodiment of the invention;
FIG.3a, 3b and 3c are graphs illustrating the definitions of three Fuzzy Logic variables used in the operation of the CM;
FIG.4a is a table illustrating Fuzzy Logic rules used by the CM to derive a Link Badness variable from the three Fuzzy Logic variables illustrated in FIG.3, and FIG.4b is a graph illustrating the definition of the Link Badness variable;
FIG.5 is a block schematic diagram showing terminology applied to the network 100 of FIG.1 to facilitate illustration of methods according to an embodiment of the invention;
FIG.6a is a table illustrating bypass link acceptance rules used by the CM in methods according to an embodiment of the invention, and FIG.6b is graph illustrating the definition of a Bypass Acceptability variable; and
FIG.7 is a table illustrating rules used to derive an alternative Link Badness variable for use in methods according to an embodiment of the invention.

### Detailed Description of Embodiments

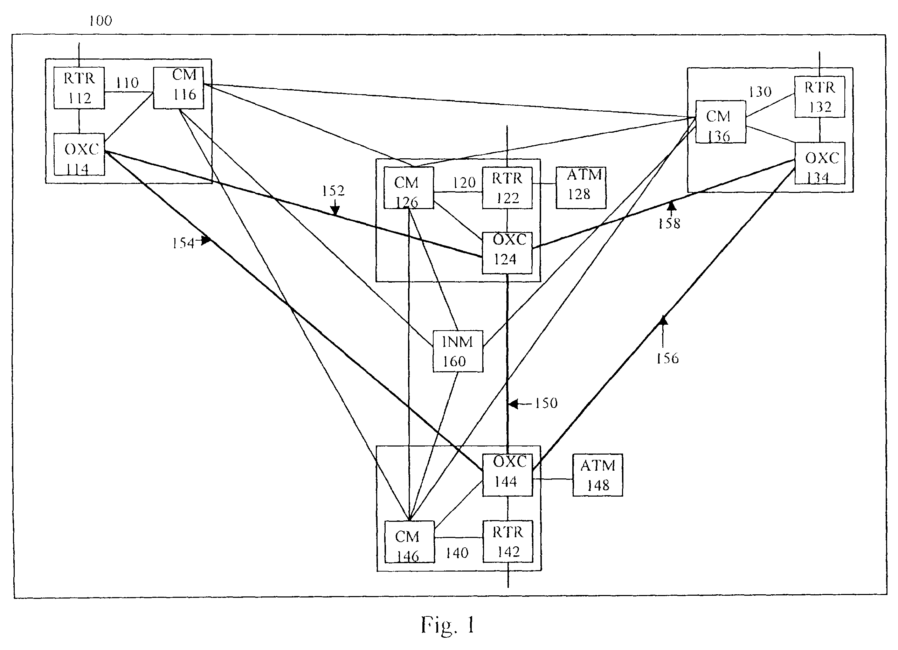

FIG.1 is a block schematic view of a communications network 100 that supports Layer 3 services, such as Internet Protocol (IP) services, according to an embodiment of the invention. The network 100 comprises a plurality of nodes 110, 120, 130, 140 interconnected by transmission links 150, 152, 154, 156, 158. Each node comprises a Router 112, 122, 132, 142, a fast Optical Cross-Connect switch (OXC) 114, 124, 134, 144, and a Configuration Manager (CM) 116, 126, 136, 146.

Each Router 112, 122, 132, 142 is connected via Low Speed Interfaces (LSI) to access equipment and is connected via High Speed Interfaces (HSI) to its respective OXC 114, 124, 134, 144. External ATM switches 128, 148 may be connected to some of the OXCs 124, 144, either directly or via the Routers 122, 142.

The OXCs 114, 124, 134, 144 are linked by Wavelength Division Multiplexed (WDM) optical transport systems 152, 154, 156, 158, each of which carries a plurality of wavelength channels. Each wavelength channel may be configured at an OXC 114 of a node 110 to add and drop traffic at that node via the Router 112 of that node, or to pass through that node 110 without adding and dropping traffic. Each OXC 114, 124, 134, 144 will normally be configured to add and drop traffic from some wavelength channels and to pass through other wavelength channels without adding and dropping traffic from those channels.

The Routers 112, 122, 132, 142, ATM switches 128, 148 and OXCs 114, 124, 134, 144 at each node are connected to a respective CM 116, 126, 136, 146 at that node. Each CM is connected to the CMs of the other nodes and to a centralized Integrated Network Management (INM) system 160. The CM 116 at node 110 receives traffic data from its respective Router 112, receives current configuration data from its respective OXC 114 and from the CMs 126, 136, 146 at other nodes 120, 130, 140, and controls the configuration of wavelength channels at its respective OXC 114. The CMs 126, 136, 146 at the other nodes 120, 130, 140 perform like functions at their respective nodes.

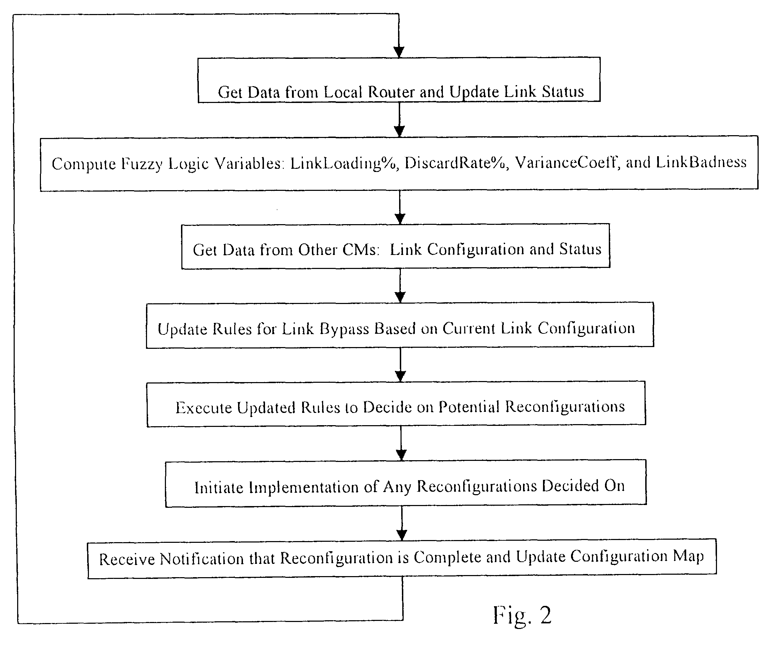

FIG.2 is a flow chart illustrating the operation of each CM 116, 126, 136, 146 according to an embodiment of the invention.

Each CM periodically polls the Router at its node to gather traffic data. The traffic data comprises a LinkLoading% for each link terminated on the Router, a DiscardRate% for each link terminated on the Router, and a VarianceCoefficient characterizing the normalized variance of the queue length for each link terminated on the Router.

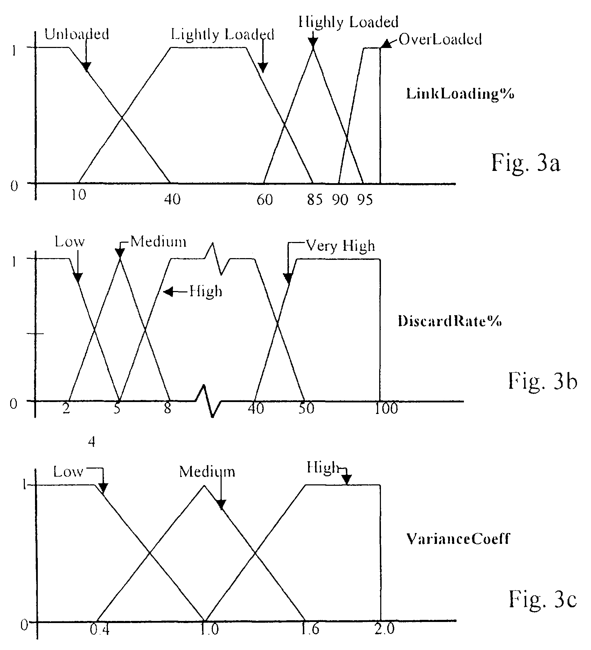

Each CM then computes Fuzzy Logic variables for each LinkLoading%, DiscardRate% and VarianceCoefficient for each link terminating on its Router using Fuzzy Logic rules illustrated in FIGs.3a, 3b and 3c.

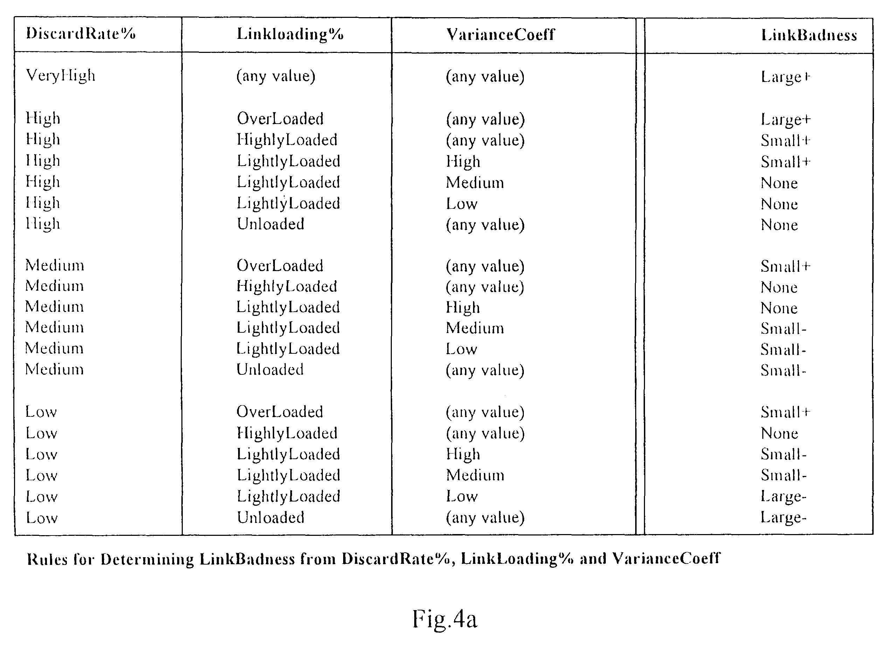

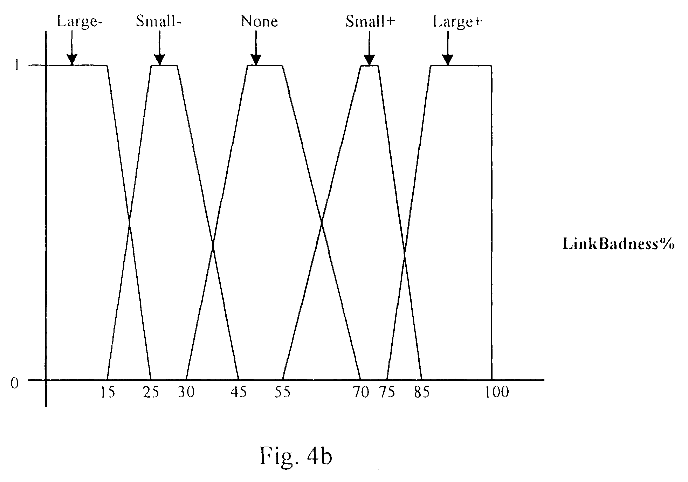

Each CM then computes a LinkBadness variable for each link terminated on its Router by applying Fuzzy Logic Rules illustrated in FIG.4 to the LinkLoading%, DiscardRate% and VarianceCoefficient variables defined above.

Each CM maintains a current map of network links and assignments of wavelength channels to routes and services.

Each CM gathers data comprising Fuzzy Variables characterizing LinkBadnesses for links terminating at other nodes so it has a complete set of LinkBadnesses for the network (or at least a local portion of the network).

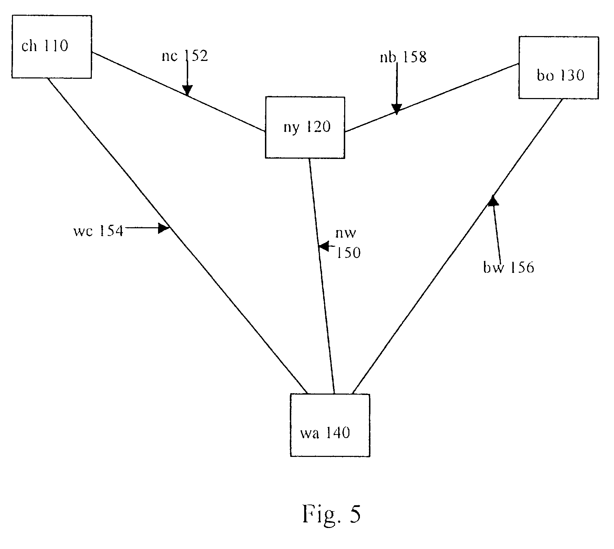

FIG.5 shows terminology applied to the network 100 of FIG.1 to facilitate description of further steps of the operation of the CM 126 of node 120. FIG.5 shows 4 cities (Chicago (ch) at node 110, New York (ny) at node 120, Boston (bo) at node 130 and Washington (wa) at node 140). The CM 126 at ny 120 sees 5 transmission links that may be used in combination to send traffic from ny 120 to ch 110 (nc 150 between ny and ch, wc 152 between wa and ch, nw 154 between ny and wa, nb 156 between ny and bo, and bw 158 between bo and wa).

The CM 126 at ny 120 computes LinkBadnesses for nc 152, nw 150 and nb 158 itself and gets LinkBadnesses for bw 156 and wc 154 from CMs 136, 146 at other nodes 130, 140,

The CM 116 at ny 110 determines all possible Bypass Links for each of its Direct Links, e.g. for the simple network 100 shown, ny 110 has possible Bypass Links of nw-wc and nb-bw-wc for Direct Link nc 150.

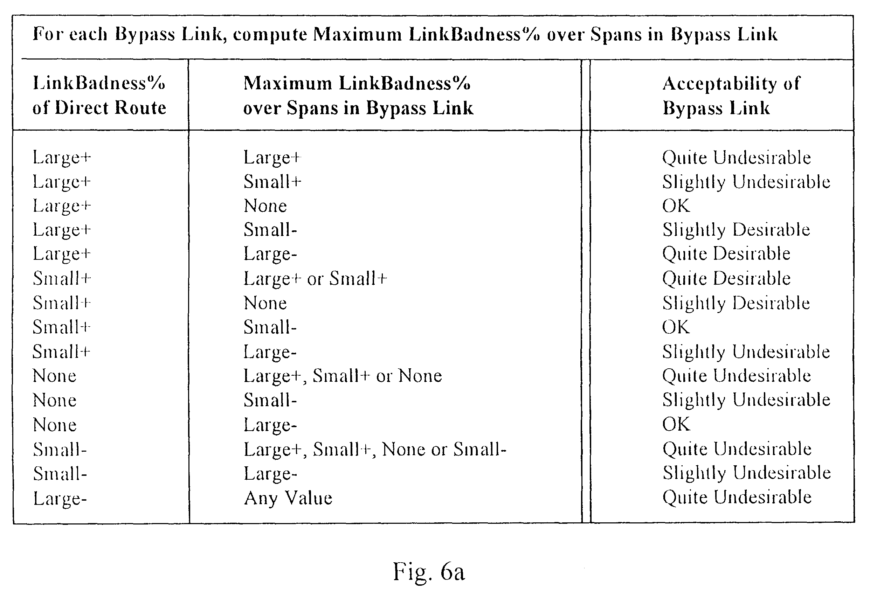

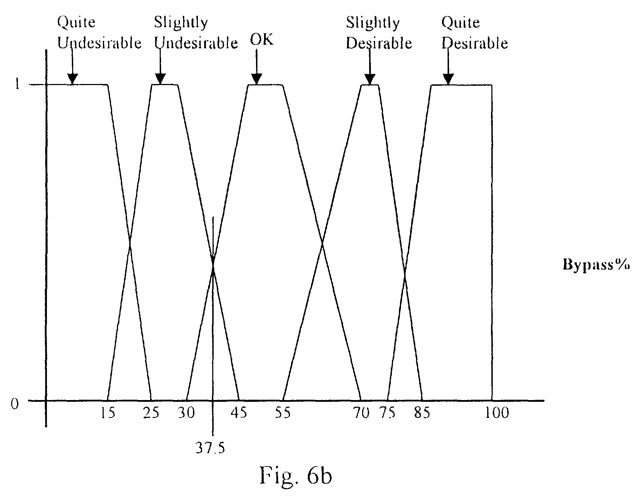

The CM 116 at ny 110 defines Fuzzy Logic acceptance rules for each possible Bypass Link. FIG.6a is a table illustrating one set of acceptance rules that favours acceptance of Bypass Links when a Direct Link is heavily loaded and spans making up a Bypass Link are lightly loaded, but favours rejection of Bypass Links when one or more spans making up the Bypass Link are heavily loaded, or the direct route is lightly loaded. FIG.6b illustrates the definition of a Bypass Acceptability variable.

The CM 126 at ny 120 executes the rules shown in FIG.6a for each possible Bypass Link to determine the acceptability of implementing each Bypass Link. Execution of the rules of FIG.6a yields a percentage membership score for each of the possible Bypass Acceptability scores (i.e. Quite Undesirable, Slightly Undesirable, OK, Slightly Desirable or Quite Desirable). The CM 126 multiplies the percentage membership score for each Bypass Acceptability score by the centroid value for each Bypass Acceptability Score and sums the results to "defuzzify" the value of the Bypass Acceptability variable.

The defuzzified value is compared to a threshold value to determine whether the Bypass Link is acceptable and reconfiguration to implement the Bypass link is appropriate. In this case, the threshold value of the defuzzified Bypass Acceptability is arbitrarily/nominally selected to be 37.5%. If the defuzzified Bypass Acceptability is less than 37.5%, the Bypass Link is more unacceptable than acceptable, and the Bypass Link will not be implemented. If the defuzzified Bypass Acceptability is greater than 37.5%, the Bypass Link is more acceptable than unacceptable, and the Bypass Link will be implemented unless an alternative Bypass Link has a higher defuzzified score. If more than one Bypass Link has a defuzzified score exceeding 37.5%, the Bypass Link with the highest score will be implemented.

For example, with reference to FIG.5, the CM 126 at ny 120 computes Bypass Link acceptability scores for possible Bypass Links nw-wc and nb-bw-wc for Direct Link nc. If the Link Badnesses for each of the links are as listed below:
LinkBadness(nc) = 100% Large+
LinkBadness(nb) = 100% Large-
LinkBadness(bw) = 100% None
LinkBadness(nw) = 100% Large+
LinkBadness(wc) = 100% None
then:
MaxLinkBadness(nw-wc) = 100% Large+
and:
BypassAcceptability(nw-wc) =
   = LinkBadness(nc)AND MaxLinkBadness(nw-wc)
   = 100% Quite Undesirable (from FIG.6a)
so:
defuzzified BypassAcceptability =
   = 100%x10%(QuiteUndesirable centroid in Fig.6b)
   = 10%
which is less than the 37.5% threshold,
while:
MaxLinkBadness(nb-bw-wc) = 100% None
and:
BypassAcceptability(nb-bw-wc) =
   = LinkBadness(nc) AND MaxLinkBadness(nb-bw-wc)
   = 100% OK (from FIG.6a)
so:
defuzzified Bypass Acceptability =
   = 100% x 50% (centroid of OK region in FIG.6b)
   = 50%
which is greater than the 37.5% threshold.
Bypass Link nw-wc is not acceptable because span nw is congested and cannot support the bypass traffic. However, no spans of Bypass Link nb-bw-wc are congested, so this Bypass Link can support bypass traffic from congested link cn. In this case, Bypass Link nb-bw-wc will be implemented.

In the example above, the CM 126 signals the CMs 116, 136, 146 of the other nodes 110, 130, 140 and the OXC 124 to implement the Bypass Link (nb-bw-wc).

If LinkBadness(nw) is changed to 100% Large- in the above example, MaxLinkBadness(nw-wc) is changed to 100% Small+ and the acceptability scores for both Bypass Links is 100% OK. The defuzzified BypassAcceptability score for both Bypass Links is 100% x 50% = 50%, which is greater than the 37.5% threshold. There is now no congestion on span nw to prevent Bypass Link nw-wc from handling bypass traffic from congested link nc. In this case, the CM 126 selects one of the Bypass Links for implementation, preferably the shorter Bypass Link (nw-wc).

If LinkBadness(wc) is changed to 100% Large+ in the above example, MaxLinkBadness is changed to 100% Large+ for both Bypass Links and the acceptability scores for both Bypass Links is 100% Quite Undesirable. The defuzzified BypassAcceptablility score for both Bypass Links is 100% x 10% = 10%, which is less than the 37.5% threshold, so neither Bypass Link is implemented. Since span wc which is common to both Bypass Links is congested, neither Bypass Link can be implemented without overloading wc.

If LinkBadness(nc) is changed to 100% None, there is no longer any congestion on Direct Link nc to relieve, and the acceptability of both Bypass Links becomes 100% Quite Unsatisfactory, giving defuzzified BypassAcceptability scores of 100% x 10% = 10%, which is less than the 37.5% threshold for both links, so that neither Bypass Link is implemented.

In the above examples, the values of the LinkBadness% variable are deliberately chosen to be "crisp" values that simplify the computations and demonstrate the overall behaviour of the system in a fairly intuitive fashion. More generally, the Fuzzy Logic variables will have "fuzzy" values. To demonstrate the fuzzy logic computations when the values of the fuzzy logic variables are not all "crisp", a fairly simple example follows:
Suppose DiscardRate%(nc) = DiscardRate%(nw) = 60%.
Then DiscardRate%(nc) = DiscardRate%(nw) = 100% VeryHigh from 3b.
Then LinkBadness(nc) = LinkBadness(nw) = 100% Large+ from 4a.

Suppose Linkloading%(nb)=5% and DiscardRate%(nb)=1%.
Then Linkloading%(nb)=100% Unloaded from 3a
and DiscardRate%(nb)=100% Low from 3b.
Then LinkBadness(nb)=100% Large- from 4a.

Suppose Linkloading%(bw) = Linkloading%(wc) = 85%.
Then Linkloading%(bw) = Linkloading%(wc) = 100% High from 3a.
Suppose DiscardRate%(bw) = DiscardRate%(wc) = 6.5%.
Then DiscardRate%(bw)=DiscardRate%(wc)=50%Medium, 50%High from 3b.
So LinkBadness(bw)=LinkBadness(wc)=50%None, 50%Small+ from 4a.

Then LinkBadness(nc)= 100%Large+ and MaxLinkBadness(nw-wc)=100%Large+
So BypassAcceptability(nw-wc)=100%QuiteUndesirable from 6a.
And defuzzified BypassAcceptability(nw-wc)=
   =100%x10%(centroid of QuiteUndesirable region in 6b)< 37.5% So Bypass Link nw-wc is not implemented.

Also LinkBadness(nc)=100%Large+
And MaxLinkBadness(nb-bw-wc)=25%None,75%Small+
So BypassAcceptability(nb-bw-wc)=25%OK, 75%slightlyUndesirable
   =46.0
(centroid of weighted OK and SlightlyDesirable regions in 6b)
   >37.5%
So Bypass Link nb-bw-wc is deemed acceptable and its implemented is initiated.

The CM 126 at ny 120 performs similar computations for all Bypass Links for its other Direct Links, and the CMs 116, 136, 146 at other nodes 110, 130 140 perform similar calculations for all Bypass Links for their Direct Links.

The above description illustrates how embodiments of the invention collect data from both the packet data layer (Layer 3) and the optical transport layer (Layers 1 and 2) to sense traffic patterns for which a reconfiguration of the optical transport layer would be beneficial, derive suitable reconfigurations and initiate implementation of those reconfigurations. The embodiments of the invention can also be used to implement operator-requested reconfigurations based, for example, on customer service change requests. The operator may command such reconfigurations using a Man Machine Interface (MMI) of the INM 160, and the INM 160 may signal the CMs 116, 126, 136, 146 as necessary to effect the requested reconfiguration.

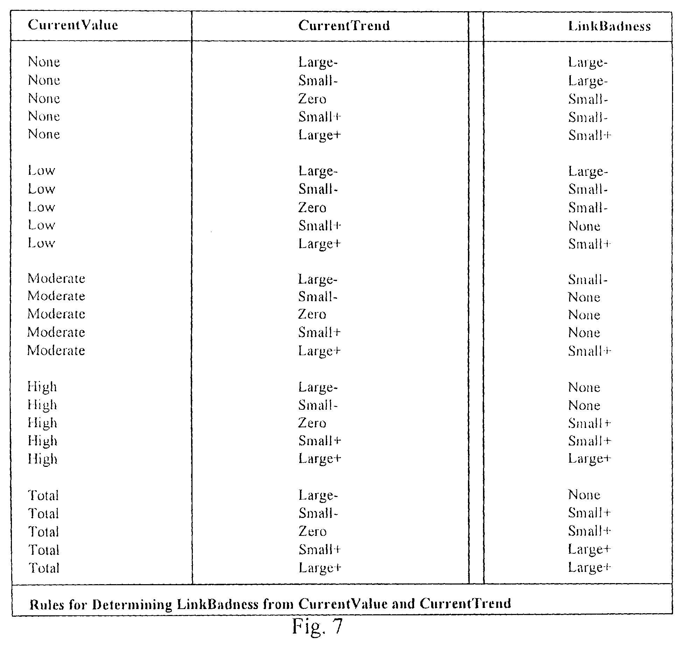

Features of the embodiments described above may be modified without departing from the invention as broadly defined in the claims below.
For example, the LinkBadness Fuzzy Variable can be defined to include weighted components characterizing both the current operating point and the current trend of traffic parameters characterizing the congestion of the link. See, for example FIG.7 which defines a set of Fuzzy Logic rules for defining a different LinkBadness variable, where CurrentValue is defined as the value of the LinkBadness variable defined in FIG.3, CurrentTrend is defined as variable characterizing the trend of the CurrentValue over subsequent readings and the modified LinkBadness variable combines the CurrentValue and the CurrentTrend in a single Fuzzy Variable.

The CMs 116, 126, 136, 146 could collect the LinkLoading%, DiscardRate%, VarianceCoeff data from the Routers 112, 122, 132, 142, the LinkLoading%, DiscardRate%, VarianceCoeff data having been computed from more basic traffic data at the Routers 112, 122, 132, 142. Alternatively, the CMs 116, 126, 136, 146 could collect the more basic traffic data from the Routers 112, 122, 132, 142 and process that data at the CMs 116, 126, 136, 146 to compute the LinkLoading%, DiscardRate%, VarianceCoeff data.

Alternative embodiments could use other Fuzzy Variables or more Fuzzy Variables, for example variables characterizing revenues generated by the links so that reconfiguration can be tailored to support revenue generating activity on the network. The following variables could be used alone or in various combinations:
1. accepted traffic discarded in network (as in the embodiment described above);
2. traffic refused at ingress;
3. use of high cost links (e.g. via other provider);
4. broken Service Level Agreement (SLAs);
5. traffic delivered beyond requirements of SLAs;
6. cost or revenue loss attributable to any of above.

In a large network, the Bypass Link acceptabilities could be computed for a local subnetwork and reconfiguration could be implemented within the local subnetwork on a relatively frequent basis to improve the operation of the local subnetwork. More global computation of Bypass Link acceptabilities could be computed over a larger subnetwork or over an entire network less frequently to improve operation of the larger network. Because the signalling and computations required for reconfiguration of the larger network necessarily take longer, reconfiguration confined to smaller local subnetworks can be advantageous where rapidly changing traffic patterns require rapid reconfigurations.

The CMs 116, 126, 136, 146 can run "Data Mining" applications as background processes using "projection techniques" to look at values of link parameters over time and to redefine boundaries of Fuzzy Variables to improve alignment of Fuzzy Variables with measurable link conditions that determine appropriateness of link reconfiguration. Such Data Mining techniques are described, for example, in the following references:
[1] IEEE Transactions on Knowledge and Data Engineering, Special Issue on Learning and Discovery in Knowledge-Based Systems, 1993.
[2]Knowledge Discovery in Databases, AAAI/MIT Press, 1991.

The location of the CM functionality described above need not necessarily be isolated from other network functionality as described above. The CM functionality at each node could be integrated into the Router or the OXC at that node, or could be distributed between the Router and the OXC. Some or all of the CM functionality could also be centralized in the INM 160, but this could impose limits on speed of reconfiguration, so that reconfiguration capabilities may not be adequate for some applications, e.g. protection switching.

In the embodiment described above, traffic information from Layer 3 IP services is combined with configuration data from Layer 1 wavelength channels of WDM optical transmission links to derive reconfiguration recommendations. This approach can be generalized to combine traffic information from any Layer 3 service with configuration information from any Layers underlying the Layer 3 service to configure links in the Layers underlying the Layer 3 service, for example:
1. physical links of the network below Layer 3, other than wavelength channels;
2. SONET/SDH paths below Layer 3;
3. virtual paths of network below Layer 3;
4. virtual channels of network below Layer 3; and
5. label switched paths of network below Layer 3.

The features and modifications described and illustrated above may be combined in subcombinations and arrangements other than those described and illustrated above, depending on what benefits of the above embodiments are required for a particular application. For example, the present invention may be realised as software code packaged on a suitable medium, such as a CD-ROM or the like. Of course, with respect to a functionality change of existing equipment, software modules could be downloaded to the intended equipment through an appropriate data carrying signal and in the form of an executable applet, such as written in JAVA script or other object-orientated code.

## Claims

1. A controller for controlling a communications network supporting a Layer 3 service, the communications network having at least one Layer below Layer 3 supporting the Layer 3 service, the controller comprising:
a data collector operable to collect data characterizing activity of the network at both Layer 3 and at the at least one Layer below Layer 3;
a data processor operable to process the collected data to determine that a reconfiguration of the at least one Layer below Layer 3 is favourable, and to determine a favoured reconfiguration of the at least one Layer below Layer 3; and
a reconfiguration initiator operable to initiate implementation of the favoured reconfiguration.

2. The controller as defined in claim 1, wherein the reconfiguration initiator comprises a transmitter operable to transmit at least one signal to network elements of the at least one Layer below Layer 3 to initiate implementation of the favoured reconfiguration.

3. The controller as defined in claim 1 or 2, wherein the data processor is operable to process collected data as Fuzzy Logic variables according to Fuzzy Logic rules to determine that at least one of:
a reconfiguration of the at least one Layer below Layer 3 is favourable; and
a favoured reconfiguration of the at least one Layer below Layer
3.

4. The controller as defined in claim 3, wherein at least some of the Fuzzy Logic variables characterize:
Layer 3 traffic as applied to transmission links in the at least one Layer below Layer 3, and at least some of the Fuzzy Logic rules are based on configurations of the transmission links; or
revenue dependent on specific transmission link configurations, and at least some of the Fuzzy Logic rules are based on configurations of the transmission links.

5. The controller as defined in claim 3, wherein the Fuzzy Logic variables comprise variables selected from the group consisting of:
accepted traffic discarded in network;
traffic refused at ingress;
use of high cost links;
broken Service Level Agreements (SLAs);
traffic delivered beyond requirements of SLAs; and
cost or revenue loss attributable to any of:
accepted traffic discarded in network;
traffic refused at ingress;
use of high cost links;
broken Service Level Agreements (SLAs); and
traffic delivered beyond requirements of SLAs.

6. The controller as defined in claim 3, 4 or 5, wherein the data processor is operable to process collected data according to Data Mining techniques to improve definitions of Fuzzy Logic variables.

7. The controller as defined in any preceding claim, wherein:
the data collector is operable to collect data characterizing Layer 3 traffic, and data characterizing configurations of the at least one Layer below Layer 3; and
the data processor is operable to process the collected traffic data as Fuzzy Logic variables, and is operable to process the configuration data to define Fuzzy Logic rules.

8. The controller as defined in any preceding claim, wherein the reconfiguration initiator is operable to initiate reconfiguration of links below Layer 3 selected from the group consisting of:
physical links of the network below Layer 3;
SONET/SDH paths below Layer 3;
virtual paths of network below Layer 3;
virtual channels of network below Layer 3; and
label switched paths of network below Layer 3.

9. A node for a communications network, comprising:
a router for routing data packets;
a cross-connect switch connected to the router for configuring transmission links connected to other nodes; and
a configuration controller connected to the router and to the cross-connect switch for controlling configuration of the transmission links, the configuration controller being operable:
to collect data characterizing activity of the network at both the router and the cross-connect switch;
to process the collected data to determine that a reconfiguration of the transmission links is favourable, and to determine a favoured reconfiguration of the transmission links; and
to initiate implementation of the favoured reconfiguration.

10. A communications network for supporting a Layer 3 service, comprising a plurality of interconnected network nodes, each node comprising:
a router for routing data packets;
a cross-connect switch connected to the router for configuring transmission links connected to other nodes; and
a configuration controller connected to the router and to the cross-connect switch for controlling configuration of the transmission links, the configuration controller being operable:
to collect data characterizing activity of the network at both the router and the cross-connect switch;
to process the collected data to determine that a reconfiguration of the transmission links is favourable, and to determine a favoured reconfiguration of the transmission links; and
to initiate implementation of the favoured reconfiguration.

11. The node of claim 9 or the communications network as defined in claim 10, wherein the configuration controller is operable to process collected data as Fuzzy Logic variables according to Fuzzy Logic rules to determine at least one of:
that a reconfiguration of the transmission links is favourable; and
a favoured reconfiguration of the transmission links.

12. The node of claim 9 or 11 or the communications network as defined in claim 11, wherein:
the configuration controller is operable to process the collected traffic data as Fuzzy Logic variables, and is operable to process the configuration data to define Fuzzy Logic rules.

13. The node as defined in claim 9, 11 or 12, wherein the configuration controller comprises functionality which is:
integrated with the router;
integrated with the cross-connect switch; or
separate from the router and the cross-connect switch.

14. The communications network as defined in claim 10, 11 or 12, wherein the configuration controller comprises centralized functionality which is connected to multiple nodes of the network

15. The communications network as defined in claim 10, 11 or 12, wherein the configuration controller comprises functionality which is distributed among at least some of the nodes.

16. A method for controlling a communications network supporting a Layer 3 service, the communications network having at least one Layer below Layer 3 supporting the Layer 3 service, the method comprising:
collecting data characterizing activity of the network at both Layer 3 and at the at least one Layer below Layer 3;
processing the collected data to determine that a reconfiguration of the at least one Layer below Layer 3 is favourable, and to determine a favoured reconfiguration of the at least one Layer below Layer 3; and
initiating implementation of the favoured reconfiguration.

17. The method as defined in claim 16, wherein the step of initiating implementation of the favoured reconfiguration initiator comprises transmitting at least one signal to network elements of the at least one Layer below Layer 3 to initiate implementation of the favoured reconfiguration.

18. The method as defined in claim 16 or 17, wherein the step of processing the collected data comprises processing the collected data as Fuzzy Logic variables according to Fuzzy Logic rules to determine that at least one of:
a reconfiguration of the at least one Layer below Layer 3 is favourable; and
a favoured reconfiguration of the at least one Layer below Layer 3.

19. The method as defined in claim 18, wherein at least some of the Fuzzy Logic variables characterize:
Layer 3 traffic as applied to transmission links in the at least one Layer below Layer 3, and at least some of the Fuzzy Logic rules are based on configurations of the transmission links; or
revenue dependent on specific transmission link configurations, and at least some of the Fuzzy Logic rules are based on configurations of the transmission links.

20. The method as defined in claim 18, wherein the Fuzzy Logic variables comprise variables selected from the group consisting of:
accepted traffic discarded in network;
traffic refused at ingress;
use of high cost links;
broken Service Level Agreements (SLAs);
traffic delivered beyond requirements of SLAs; and
cost or revenue loss attributable to any of:
accepted traffic discarded in network;
traffic refused at ingress;
use of high cost links;
broken Service Level Agreements (SLAs); and
traffic delivered beyond requirements of SLAs.

21. The method as defined in claim 18, 19 or 20, further comprising the step of processing collected data according to Data Mining techniques to improve definitions of Fuzzy Logic variables.

22. The method as defined in any of claims 16 to 21, wherein:
the step of collecting data comprises collecting data characterizing Layer 3 traffic, and data characterizing configurations of the at least one Layer below Layer 3; and
the step of processing the collected data comprises processing the collected traffic data as Fuzzy Logic variables, and processing the configuration data to define Fuzzy Logic rules.

23. The method as defined in any of claims 16 to 22, wherein the step of initiating a reconfiguration comprises initiating reconfiguration of a link below Layer 3 selected from the group consisting of:
physical links of the network below Layer 3;
SONET/SDH paths below Layer 3;
virtual paths of network below Layer 3;
virtual channels of network below Layer 3; and
label switched paths of network below Layer 3.

24. The method as defined in any of claims 16 to 23, wherein:
the step of collecting data comprises collecting data characterizing activity of a local subnetwork at both Layer 3 and at the at least one Layer below Layer 3;
the step of processing the collected data comprises processing the collected data to determine that a reconfiguration of the local subnetwork at the at least one Layer below Layer 3 is favourable, and to determine a favoured reconfiguration of local subnetwork at the at least one Layer below Layer 3; and
the step of initiating implementation of the favoured reconfiguration comprises initiating reconfiguration of the local subnetwork,

25. The method as defined in claim 24, further comprising:
collecting data characterizing activity of a larger network containing the local subnetwork at both Layer 3 and at the at least one Layer below Layer 3;
processing the collected data to determine that a reconfiguration of the larger network at the at least one Layer below Layer 3 is favourable, and to determine a favoured reconfiguration of larger network at the at least one Layer below Layer 3; and
initiating reconfiguration of the larger network.

26. The method of any of claims 16 to 25, wherein the Layer 3 service supports a packet data service and the at least one layer below Layer 3 supports an optical transport layer.

27. A computer program element comprising computer program code means arranged to make a controller implement procedure to perform the method of any of claims 16 to 26.

28. The computer program element of claim 27, embodied on a computer readable medium.
